# EUROPÄISCHE PATENTSCHRIFT

(11) **EP 2 909 247 B1**
(45) Veröffentlichungstag und Bekanntmachung des Hinweises auf die Patenterteilung: **08.07.2020**
(21) Anmeldenummer: 13776490.8
(22) Anmeldetag: 14.10.2013
(51) Int. Cl.: C08G 18/66, C08G 18/73, C08L 75/04, C08L 33/12

(54) **THEMOPLASTISCH VERARBEITBARE TRANSPARENTE BLENDS AUS THERMOPLASTISCHEN POLYURETHANEN UND POLY(METH)ACRYLATEN**
THEMOPLASTIC PROCESSABLE TRANSPARENT BLENDS OF THERMOPLASTIC POLYURETHANES AND POLY(METH)ACRYLATES
MÉLANGE TRANSPARENT POUVANT ÊTRE TRAITÉ DE MANIÈRE THERMOPLASTIQUE CONSTITUÉ DE POLYURÉTHANES THERMOPLASTIQUES ET DE POLY(MÉTH)ACRYLATES

(30) Priorität: 16.10.2012 EP 12188669
(43) Veröffentlichungstag der Anmeldung: 26.08.2015
(73) Patentinhaber: BASF SE, 67056 Ludwigshafen am Rhein (DE)
(72) Erfinder: HENZE, Oliver Steffen, 49448 Lemförde (DE); UHLHORN, Frank, 49457 Drebber (DE); BERTELS, Alfons, 49356 Diepholz (DE); OLTMANNS, Anja, 49324 Melle (DE); HANSEN, Marc, 30167 Hannover (DE)
(86) Internationale Anmeldenummer: PCT/EP2013/071403
(87) Internationale Veröffentlichungsnummer: WO 2014/060342

(56) Entgegenhaltungen:
- WO-A1-2007/057242
- WO-A2-2010/099958
- US-A- 3 700 752
- "ISO 1133 Plastics - Determination of the melt mass-flow rate (MFR) and the melt volume-flow rate (MVR) of thermoplastics", INTERNATIONAL STANDARD ISO/IEC, XX, XX, vol. 1133, 1 January 2005 (2005-01-01), XP009129104,
- "ASTM D 1003-11 Standard Test Method for Haze and Luminous Transmittance of Transparent Plastics", ASTM DESIGNATION, ASTM INTERNATIONAL, US, vol. ASTM D 1003-11, 1 January 2011 (2011-01-01), pages 223-229, XP009179395,

## Beschreibung

Die vorliegende Erfindung betrifft Zusammensetzungen enthaltend mindestens ein thermoplastisches Polyurethan und mindestens ein Poly(meth)acrylat, wobei das mindestens eine thermoplastische Polyurethan ein auf 1,6-Hexamethylendiisocyanat (HDI), mindestens einem Diol und mindestens einem Kettenverlängerer, ausgewählt aus der Gruppe bestehend aus 1,2-Ethylenglycol, 1,3-Propandiol, 1,4-Butandiol und 1,6-Hexandiol, basierendes Polyurethan ist. Weiter betrifft die vorliegende Erfindung Formkörper umfassend die erfindungsgemäßen Zusammensetzungen sowie die Verwendung der erfindungsgemäßen Zusammensetzungen zur Herstellung einer Folie und zur Beschichtung eines Formkörpers.

Poly(meth)acrylate, insbesondere Polymethylmethacrylate (PMMA), sind Kunststoffe mit einem hervorragenden Eigenschaftsprofil. Nachteilig ist jedoch die geringe Kerbschlagzähigkeit dieser Kunststoffe. Zur Verbesserung dieser Eigenschaft werden Polymethylmethacrylate mit Schlagzähmodifiern versehen, die ebenfalls an sich bekannt sind. Diese schlagzähmodifizierten Polymethylmethacrylate sind unter anderem in EP 0 113 924 A, EP 0 522 351 A, EP 0 465 049 A und EP 0 683 028 A offenbart. Viele dieser Zusammensetzungen zeigen jedoch eine starke Neigung zur Bildung von so genanntem Weißbruch. Weißbruch stellt eine Trübung des Kunststoffes dar, die bei Biegebeanspruchung oder bei Schlageinwirkung auftritt. Eine schlagzähe Kunststoffformmasse auf Basis von Methyl(meth)acrylat mit einer geringen Weißbruchbildung wird in DE 38 42 796 beschrieben.

Darüber hinaus sind Kunststoffmischungen bekannt, die Poly(meth)acrylate und Polyurethane umfassen. Durch diese Mischung wird ebenfalls ein Kunststoff mit guter Kerbschlagzähigkeit erhalten. Interpenetrierende Netzwerke, die auf Mischungen von Poly(meth)acrylaten und Polyurethanen basieren, sind unter anderem in US 3,700,752, US 5,539,053 und EP 0 272 975 A beschrieben. Nachteilig ist, dass diese Kunststoffe vielfach nicht thermoplastisch verarbeitet werden können.

In der WO 2007/057242 A1 werden transparente kälteschlagzähe Kunststoffmischungen aus einem thermoplastischen Polyurethan (TPU) und einem schlagzähmodifizierten Poly(meth)acrylat beschrieben. Diese Kunststoffmischungen weisen ausweislich der WO 2007/057242 A1 bei guter Schlagzähigkeit, einem hohen Zugmodul und guter Witterungsbeständigkeit auch noch eine akzeptable Transparenz auf. Für die Kunststoffmischungen werden thermoplastische Polyurethane mit aliphatischen Verbindungseinheiten verwendet. Die WO 2007/057242 A1 lehrt, dass für Mischungen von schlagzähmodifizierten Poly(meth)acrylate und thermoplastischen Polyurethane mit aliphatischen Verbindungseinheiten unter den dort angegebenen Messbedingungen Transmissionen von 83% erreicht werden können.

Die WO 2010/099958 A2 betrifft Isolierpasten sowie Verfahren zur Herstellung der Isolierpasten, wobei die Isolierpaste ein dispergierbares thermoplastisches Polyurethan und Polyacrylate enthält.

In der WO 2009/135702 A1 werden Kunststoffmischungen aus thermoplastischen Polyurethanen und schlagzähmodifiziertem Poly(meth)acrylat beschrieben, die ausweislich WO 2009/135702 A1 eine besonders geringe Rissbildung, eine geringe Neigung zum Weißbruch, hohe Kerbschlagzähigkeiten bei tiefen Temperaturen, eine gute UV-Beständigkeit, eine hohe Transparenz sowie eine gute Bedruckbarkeit aufweisen. Das wird erreicht durch Verwendung eines schlagzähmodifizierten Poly(meth)acrylats mit einer Hartphase mit einer Glastemperatur von mindestens 70°C und einer Zähphase mit einer Glastemperatur von höchstens -10°C, wobei die Zähphase eine mittlere Teilchengröße von höchstens 130 nm aufweist und mindestens ein Teil der Zähphase mit der Hartphase kovalent verknüpft ist. Für die Kunststoffmischung werden vorzugsweise thermoplastische Polyurethane verwendet, die höchstens 10 Gew.-% aromatische Gruppen aufweisen.

Es zeigt sich aber, dass die Transparenz allein kein ausreichendes Kriterium für die Beurteilung der Kunststoffe ist, da die Transparenz zum einen durch die Lichtdurchlässigkeit oder Transmission, zum anderen aber auch durch die Trübung (HAZE) und die Bildschärfe (Clarity) beeinflusst wird.

Ein Maß für die Trübung von transparenten Proben, z. B. Kunststoffscheiben oder-folien ist der HAZE Wert. Der HAZE Wert beschreibt den Anteil des transmittierten Lichts, der von der durchstrahlten Probe nach vorne gestreut wird (Streuung > 2,5°). Somit quantifiziert der HAZE Wert Materialfehler in der Oberfläche oder der Struktur, die die klare Durchsicht stören. Die im Stand der Technik offenbarten Kunststoffmischungen weisen zwar eine hohe Transmission auf, die HAZE Werte derartiger Kunststoffmischungen, also die Trübung, sind für viele Anwendungen jedoch unzureichend.

Ein weiteres Kriterium für die Beurteilung der optischen Eigenschaften von Kunststoffen ist die Bildschärfe oder auch Clarity, die ebenfalls in die Beurteilung der Transparenz mit einfließt. Im Gegensatz zur Messung des HAZE Wertes wird der Clarity Wert durch die Bestimmung der Streuung in einem sehr kleinen Winkelbereich erfasst (Streuung <2,5°). Durch diese Streuung werden Konturen verzerrt und erscheinen weniger scharf. Die im Stand der Technik offenbarten Kunststoffmischungen weisen häufig eine unzureichende Bildschärfe auf.

Ausgehend von diesem Stand der Technik lag eine Aufgabe der vorliegenden Erfindung darin, Zusammensetzungen aus thermoplastischen Polyurethanen und Poly(meth)acrylaten bereitzustellen, die sich für die Herstellung von Folien und Beschichtungen eignen, d.h. die eine hohe Transmission und gleichzeitig eine geringe Trübung aufweisen, insbesondere eine geringe Trübung und eine hohe Bildschärfe.

Hierbei sollte die Zusammensetzung möglichst einfach herstellbar sein und thermoplastisch verarbeitet werden können.

Darüber hinaus kann eine weitere Aufgabe der vorliegenden Erfindung darin gesehen werden, Formkörper, insbesondere Folien, mit hoher Transmission, hohem Glanz und geringer Trübung bereitzustellen.

Erfindungsgemäß wird diese Aufgabe gelöst durch eine Zusammensetzung enthaltend mindestens ein thermoplastisches Polyurethan und mindestens ein Poly(meth)acrylat, wobei das mindestens eine thermoplastische Polyurethan ein auf 1,6-Hexamethylendiisocyanat (HDI) als Aufbaukomponente (a), mindestens einem Diol als Aufbaukomponente (b) und mindestens einem Kettenverlängerer als Aufbaukomponente (c), basierendes Polyurethan ist, wobei der mindestens eine Kettenverlängerer ausgewählt ist aus der Gruppe bestehend aus, 1,2-Ethylenglycol, 1,3-Propandiol, 1,4-Butandiol und 1,6-Hexandiol,
wobei die Zusammensetzung das mindestens eine thermoplastische Polyurethan in einer Menge im Bereich von 5 Gew.-% bis 60 Gew.-% enthält, und
wobei die Zusammensetzung das mindestens eine Poly(meth)acrylat in einer Menge im Bereich von 40 Gew.-% bis 95 Gew.-% enthält, wobei die Summe aller Komponenten der Zusammensetzung 100 Gew.-% ergibt,
wobei als Diol ein Polyetherdiol oder Polyesterdiol oder eine Mischungen aus zwei oder mehr davon eingesetzt wird, und
wobei die Aufbaukomponenten (a), (b) und (c) in solchen Mengen zur Reaktion gebracht werden, dass das Äquivalenzverhältnis von NCO-Gruppen der Diisocyanate (a) zur Summe der Hydroxylgruppen der Aufbaukomponenten (b) und (c) 0,9 bis 1,1 : 1 beträgt.

Es wurde überraschend gefunden, dass diese Zusammensetzungen sehr gute HAZE Werte aufweisen, die ein Maß für die Trübung sind, und an sich gute Eigenschaftsprofile für die Herstellung von Folien besitzen.

Im Rahmen der vorliegenden Erfindung werden HAZE Werte einer Zusammensetzung sofern nicht anders angegeben an einer aus der Zusammensetzung hergestellten Spritzplatte von 2 mm Dicke gemäß ASTM D 1003, Methode A gemessen.

Überraschenderweise wurde gefunden, dass durch die erfindungsgemäße Auswahl des eingesetzten thermoplastischen Polyurethans der HAZE Wert der Zusammensetzungen beeinflusst werden kann. Es wurde gefunden, dass Zusammensetzungen umfassend thermoplastische Polyurethane, die auf anderen Isocyanaten basieren, schlechtere HAZE Werte aufweisen, d.h. eine höhere Trübung.

Die erfindungsgemäßen Zusammensetzungen bzw. aus diesen hergestellte Formkörper weisen auch überraschend gute Clarity Werte auf, d. h. hohe. Die Clarity wird ebenfalls an Spritzplatten von 2 mm Dicke gemäß ASTM D 1003 bestimmt.

Zum anderen hat sich gezeigt, dass die erfindungsgemäßen Zusammensetzungen einfach herstellbar sind. Thermoplastische Polyurethane basierend auf 1,6-Hexamethylendiisocyanat (HDI), mindestens einem Diol und mindestens einem Kettenverlängerer, ausgewählt aus der Gruppe bestehend aus 1,2-Ethylenglycol, 1,3-Propandiol, 1,4-Butandiol und 1,6-Hexandiol, lassen sich überraschend gut mit Poly(meth)acrylaten verarbeiten.

Werden thermoplastische Polyurethane basierend auf anderen Isocyanaten und anderen nicht erfindungsgemäßen Kettenverlängerern in den Zusammensetzungen eingesetzt, ergeben sich ungeeignete Eigenschaften für die Verarbeitung zusammen mit Poly(meth)acrylaten, beispielsweise kann es während der Verarbeitung zur Zersetzung kommen oder die Mischbarkeit der einzelnen Komponenten ist nicht ausreichend.

Die erfindungsgemäßen Zusammensetzungen können insbesondere zu Formkörpern verarbeitet werden, die eine besonders geringe Rissfortbildung und eine geringe Neigung zur Bildung von Weißbruch zeigen. Des Weiteren weisen Formkörper, die eine erfindungsgemäße Zusammensetzung umfassen, hervorragende mechanische Eigenschaften auf, beispielsweise ein hohes Zugmodul, eine hohe Bruchdehnung und eine hohe Kerbschlagzähigkeit. Überraschend bleiben diese Eigenschaften auch bei tiefen Temperaturen erhalten.

Die erfindungsgemäße Zusammensetzung kann thermoplastisch verarbeitet werden und zeigt eine hohe Bewitterungsstabilität, insbesondere eine hohe UV-Beständigkeit. Gemäß einer bevorzugten Ausführungsform kann eine erfindungsgemäße Zusammensetzung zu Folien oder anderen Formkörpern verarbeitet werden, die eine hohe Transparenz, geringe Trübung und vorzugsweise einen hohen Glanz aufweisen.

Die erfindungsgemäßen Zusammensetzungen enthalten mindestens ein thermoplastisches Polyurethan und mindestens ein Poly(meth)acrylat.

Thermoplastische Polyurethane sind grundsätzlich aus dem Stand der Technik bekannt. Für die erfindungsgemäßen Zusammensetzungen wird mindestens ein thermoplastisches Polyurethan eingesetzt, das auf 1,6-Hexamethylendiisocyanat (HDI), mindestens einem Diol und mindestens einem Kettenverlängerer, ausgewählt aus der Gruppe bestehend aus 1,2-Ethylenglycol, 1,3-Propandiol, 1,4-Butandiol und 1,6-Hexandiol, basiert, wobei als Diol ein Polyetherdiol oder Polyesterdiol oder eine Mischungen aus zwei oder mehr davon eingesetzt wird.

Die Herstellung thermoplastischer Polyurethane erfolgt üblicher Weise durch Umsetzung der Komponenten (a) Isocyanate und (b) gegenüber Isocyanaten reaktive Verbindungen und gegebenenfalls (c) Kettenverlängerungsmittel gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Als organisches Isocyanat (a) wird erfindungsgemäß 1,6-Hexamethylendiisocyanat (HDI) eingesetzt. Dabei ist es im Rahmen der Erfindung möglich, dass reines HDI eingesetzt wird. Ebenso ist es möglich, dass HDI mit bis zu 5 Gew.-% Verunreinigungen oder Zusatzstoffen eingesetzt wird.

Es hat sich gezeigt, dass die erfindungsgemäßen Zusammensetzungen enthaltend mindestens ein thermoplastisches Polyurethan basierend auf HDI besonders vorteilhafte Eigenschaftsprofile aufweisen.

Als gegenüber Isocyanaten reaktive Verbindung (b) wird erfindungsgemäß mindestens ein Polyetherdiol oder Polyesterdiol oder eine Mischungen aus zwei oder mehr davon als Diol eingesetzt.

Erfindungsgemäß geeignete Polyetherdiole sind beispielsweise solche, die auf Ethylenoxid oder Propylenoxid oder Mischungen davon basierenden, beispielsweise Copolymere wie Blockcopolymere. Das Verhältnis von Ethylenoxid- und Propylenoxideinheiten kann dabei in weiten Bereichen variieren, beispielsweise kann das Verhältnis von Ethylenoxid- zu Propylenoxideinheiten im Bereich von 50:50 bis 95:5 liegen, vorzugsweise im Bereich von 60:40 bis 90:10, weiter bevorzugt im Bereich von 70:30 bis 85:15, insbesondere bevorzugt im Bereich von 75:25 bis 80:20. Das Molekulargewicht der im Rahmen der vorliegenden Erfindung eingesetzten Polyetherdiole liegt dabei beispielsweise im Bereich von 1000 bis 4000 Dalton, bevorzugt im Bereich von 1500 bis 3000 Dalton, weiter bevorzugt im Bereich von 2000 bis 2500 Dalton.

Insbesondere werden erfindungsgemäß als Diol Polyesterdiole eingesetzt. Es hat sich gezeigt, dass bei der Verwendung thermoplastischer Polyurethane basierend auf 1,6-Hexamethylendiisocyanat (HDI), mindestens einem Polyesterdiol und mindestens einem Kettenverlängerer, ausgewählt aus der Gruppe bestehend aus 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol, Zusammensetzungen mit besonders vorteilhaften Eigenschaftsprofilen erhalten werden. Beispielsweise eignen sich die Folien insbesondere zur Herstellung von Folien mit hoher Transmission und geringer Trübung.

Gemäß einer bevorzugten Ausführungsform betrifft die vorliegende Erfindung demgemäß eine Zusammensetzung enthaltend mindestens ein thermoplastisches Polyurethan und mindestens ein Poly(meth)acrylat wie zuvor beschrieben, wobei das Diol ein Polyesterdiol ist.

Grundsätzlich können erfindungsgemäß alle geeigneten Polyesterdiole eingesetzt werden, wobei im Rahmen der vorliegenden Erfindung der Begriff Polyesterdiol auch Polycarbonatdiole umfasst.

Besonders bevorzugt ist im Rahmen der vorliegenden Erfindung das Diol zu mindestens 90 % bis 100% ein Polyesterdiol, weiter bevorzugt zu mindestens 95% bis 100%, insbesondere zu mindestens 98% bis 100%. Insbesondere sind vorzugsweise die Anteile von Polyethern im Diol kleiner als 5%, weiter bevorzugt kleiner als 2%, besonders bevorzugt kleiner als 1%.

Geeignete Polyesterdiole können beispielsweise aus organischen Dicarbonsäuren mit 2 bis 12 Kohlenstoffatomen, vorzugsweise aromatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure und Phthalsäure, Isophthalsäure, Terephthalsäure und die isomeren Naphthalindicarbonsäuren. Die Dicarbonsäuren können dabei sowohl einzeln als auch im Gemisch untereinander verwendet werden. Anstelle der freien Dicarbonsäuren können auch die entsprechenden Dicarbonsäurederivate, wie beispielsweise Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan, bevorzugt Ethylenglycol, Propandiol-1,3, Methylpropandiol-1,3, 1,4-Butandiol, 3-Methylpentandiol-1,5 oder 1,6-Hexandiol. Erfindungsgemäß geeignet sind beispielsweise auch Polyesterdiole aus Lactonen, beispielsweise ε-Caprolacton oder Hydroxycarbonsäuren, z.B. ω-Hydroxycapronsäure und Hydroxybenzoesäuren.

Die Umsetzungsbedingungen von Carbonsäure und Alkohol werden üblicherweise so gewählt, dass die resultierenden Polyesterole keine freien Säuregruppen aufweisen. Üblicherweise weisen die resultierende Polyesterole eine tatsächliche Funktionalität von 1,9 bis 2,1, bevorzugt von 2,0 auf.

Zur Herstellung der Polyesterole können die Mischungen aus Säuren und Alkoholen katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium oder Argon polykondensiert werden. Die Polykondensation kann bei Temperaturen von 150 bis 250 °C, vorzugsweise 180 bis 220 °C gegebenenfalls unter vermindertem Druck, erfolgen. Die Polykondensation wird üblicherweise bis zu einer gewünschten Säurezahl, die vorteilhafterweise kleiner als 10, vorzugsweise kleiner als 2 ist, fortgeführt. Zur Herstellung der Polyesterole werden Säuren und Alkohole üblicherweise im Molverhältnis von 1:1 bis 1,8, vorzugsweise 1:1,05 bis 1,2 polykondensiert.

Insbesondere werden im Rahmen der vorliegenden Erfindung bevorzugt Polyesterdiole aus ε-Caprolacton und Kondensationsprodukte von Adipinsäure oder Sebacinsäure mit mindestens einem Alkohol ausgewählt aus der Gruppe bestehend aus Ethylenglycol, Propandiol-1,3, Methylpropandiol-1,3, 1,4-Butandiol, 3-Methylpentandiol-1,5 oder 1,6-Hexandiol als Polyesterdiole eingesetzt.

Vorzugsweise weisen die eingesetzten Polyesterdiole ein zahlenmittleres Molekulargewichte Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf. Geeignete Bedingungen für die Molekulargewichtsbestimmung mittels GPC sind dem Fachmann bekannt.

Als Kettenverlängerungsmittel (c) wird erfindungsgemäß mindestens ein Kettenverlängerer ausgewählt aus der Gruppe bestehend aus 1,2-Ethylenglycol, 1,3-Propandiol, 1,4-Butandiol und 1,6-Hexandiol eingesetzt.

Katalysatoren (d) welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-etyhlhexanoat und Bismut-octanoat. Die Katalysatoren (d) werden bevorzugt in Mengen von 0,0001 bis 0,1 Gew.-Teilen pro 100 Gew.-Teile der mit Isocyanten reakiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Herstellungsverfahren für thermoplastische Polyurethane werden beispielsweise offenbart in EP 0922552 A1, DE 10103424 A1 oder WO 2006/072461 A1. Die Herstellung erfolgt üblicherweise auf einer Bandanlage oder einem Reaktionsextruder, kann aber auch im Labormaßstab, beispielsweise im Handgußverfahren, erfolgen. In Abhängigkeit der stofflichen Eigenschaften der Komponente werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. Zur Einstellung von Härte der TPU können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Shore-Härte A von kleiner als 95, vorzugsweise von 95 bis 75 Shore A, besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

Erfindungsgemäß weist das in den Zusammensetzungen enthaltene thermoplastische Polyurethan vorzugsweise eine Shore-Härte (Shore A) im Bereich von 70 bis 100 auf. Bevorzugt weist das thermoplastische Polyurethan eine Shore-Härte (Shore A) im Bereich von 80 bis 95, weiter bevorzugt im Bereich von 85 bis 90 auf.

Gemäß einer bevorzugten Ausführungsform betrifft die vorliegenden Erfindung demgemäß eine Zusammensetzung enthaltend mindestens ein thermoplastisches Polyurethan und mindestens ein Poly(meth)acrylat wie zuvor beschrieben, wobei das thermoplastische Polyurethan eine Shore-Härte (Shore A) im Bereich von 70 bis 100 aufweist.

Dabei wird die Shore-Härte gemäß DIN 53505 bestimmt.

Weiterhin weist das in den Zusammensetzungen enthaltene thermoplastische Polyurethan vorzugsweise eine Schmelze-Volumenfließrate (MVR) im Bereich von 5 bis 200 g/10min gemessen gemäß DIN EN ISO 1133 auf, wobei bei 200°C Probentemperatur und 5kg Belastung gemessen wird, sofern nicht anders angegeben. Die Schmelze-Volumenfließrate ist ein Maß für das Molekulargewicht des thermoplastischen Polyurethans.

Gemäß einer bevorzugten Ausführungsform betrifft die vorliegenden Erfindung demgemäß eine Zusammensetzung enthaltend mindestens ein thermoplastisches Polyurethan und mindestens ein Poly(meth)acrylat wie zuvor beschrieben, wobei das mindestens eine thermoplastische Polyurethan eine Schmelze-Volumenfließrate (MVR) im Bereich von 5 bis 200 g/10min gemessen gemäß DIN EN ISO 1133 aufweist.

Die erfindungsgemäße Zusammensetzung enthält das mindestens eine thermoplastische Polyurethan in einer Menge im Bereich von 5 Gew.- % bis 60 Gew.-%, bezogen auf die gesamte Zusammensetzung, bevorzugt im Bereich von 10 Gew.-% bis 50 Gew.-%, weiter bevorzugt im Bereich von 15 Gew.- % bis 45 Gew.- % und besonders bevorzugt im Bereich von 25 Gew.-% bis 40 Gew.-%, jeweils bezogen auf die gesamte Zusammensetzung.

Erfindungsgemäß umfasst die Zusammensetzung mindestens ein Poly(meth)acrylat. Unter dem Begriff Poly(meth)acrylat wird im Rahmen der vorliegenden Erfindung ein Polymer verstanden, dass durch radikalische Polymerisation von (Meth)acrylaten erhältlich ist. Bevorzugte Poly(meth)acrylate sind schlagzähmodifizierte Poly(meth)acrylate. Erfindungsgemäß ist es auch möglich, dass die Zusammensetzung eine Mischung aus verschiedenen Poly(meth)acrylaten enthält, insbesondere eine Mischung aus einem Poly(meth)acrylat und einem schlagzähmodifizierten Poly(meth)acrylat.

Dabei wird im Rahmen der vorliegenden Erfindung unter schlagzähmodifiziert verstanden, dass die Eigenschaften des Poly(meth)acrylats durch Zugabe eines Schlagzähmodifizierers derart verändert wurden, dass sich bei nicht instrumentierter Schlagzähigkeitsprüfung gemäß ISO 179-1:2010 verbesserte Eigenschaften ergeben.

Insbesondere sind erfindungsgemäß Poly(meth)acrylate geeignet, die mindestens 40 Gew.-%, besonders bevorzugt mindestens 60 Gew.-% und ganz besonders bevorzugt mindestens 80 Gew.-% an Wiederholungseinheiten umfassen, die von (Meth)acrylaten abgeleitet sind. Die Poly(meth)acrylate können bevorzugt durch radikalische Polymerisation erhalten werden. Dementsprechend ergibt sich der Gewichtsanteil an Wiederholungseinheiten aus den zur Herstellung der Polymere eingesetzten Gewichtsanteilen an entsprechenden Monomeren.

Der Ausdruck (Meth)acrylate umfasst Methacrylate und Acrylate sowie Mischungen aus beiden. Diese Monomere sind weithin bekannt. Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den (Meth)acrylaten kann ein erfindungsgemäß einsetzbares Poly(meth)acrylat Wiederholungseinheiten aufweisen, die von Comonomeren abgeleitet sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-diisobutylen, 4-Methylpenten-1; Acrylnitril; Vinylester, wie Vinylacetat; Styrol, substituierte Styrole mit einem Alkylsubstituenten in der Seitenkette, wie z. B. alpha-Methylstyrol und alpha-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3- Vinylpyridin, 2-Methyl-5-vinylpyridin, 3-Ethyl-4-vinylpyridin, 2,3-Dimethyl- 5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im Allgemeinen werden diese Comonomere zur Herstellung der Poly(meth)acrylate in einer Menge von 0 bis 60 Gew.-%, vorzugsweise 0,1 bis 40 Gew.-% und besonders bevorzugt 1 bis 20 Gew.-%, bezogen auf das Gewicht der Monomere, eingesetzt, wobei die Verbindungen einzeln oder als Mischung verwendet werden können.

Ganz besonders bevorzugt wird als Poly(meth)acrylat Polymethylmethacrylat (PMMA) eingesetzt. Diese Polymere enthalten einen hohen Anteil an Wiederholungseinheiten, die von Methylmethacrylat abgeleitet sind. Im Allgemeinen enthalten Mischungen zur Herstellung von Polymethylmethacrylat mindestens 50 Gew.-% und höchstens 100 Gew.-%, vorzugsweise mindestens 80 Gew.-% und besonders bevorzugt mindestens 95 Gew.-%, bezogen auf das Gewicht der Monomere, Methylmethacrylat.

Gemäß einer weiteren Ausführungsform betrifft die vorliegende Erfindung daher auch eine Zusammensetzung enthaltend mindestens ein thermoplastisches Polyurethan und mindestens ein Polymethyl(meth)acrylat, wie zuvor beschrieben.

Das Gewichtsmittel des Molekulargewichts Mw bevorzugter Poly(meth)acrylate, insbesondere bevorzugter Polymethylmethacrylate, liegt im Bereich zwischen 20 000 und 1 000 000 g/mol, vorzugsweise 50 000 bis 500 000 g/mol und besonders bevorzugt 80 000 bis 300 000 g/mol, bestimmt mittels GPC.

Grundsätzlich können im Rahmen der vorliegenden Erfindung alle geeigneten Poly(meth)-acrylate eingesetzt werden, wobei vorzugsweise Mischungen aus zwei oder mehreren Poly(meth)acrylaten, besonders bevorzugt Mischungen aus zwei oder mehreren Poly(meth)acrylaten enthaltend schlagzähmodifizierte Poly(meth)acrylate, eingesetzt werden.

Gemäß einem besonderen Aspekt der vorliegenden Erfindung kann Gewichtsverhältnis von schlagzähmodifizierten Poly(meth)acrylat zu weiterem Poly(meth)acrylat im Bereich von 1:10 bis 10:1 liegen.

Erfindungsgemäß kann das Gewichtsverhältnis des mindestens einen thermoplastischen Polyurethans zu dem mindestens einen Poly(meth)acrylat im Bereich von 1:10 bis 1:1 liegen.

Gemäß einer bevorzugten Ausführungsform betrifft die vorliegenden Erfindung demgemäß eine Zusammensetzung enthaltend mindestens ein thermoplastisches Polyurethan und mindestens ein Poly(meth)acrylat wie zuvor beschrieben, wobei das Gewichtsverhältnis des mindestens einen thermoplastischen Polyurethans zu dem mindestens einen Poly(meth)acrylat im Bereich von 1:5 bis 1:1, besonders bevorzugt im Bereich von 1:4 bis 1:1,5, weiter bevorzugt im Bereich von 1:3 bis 1:2 liegt.

Gemäß einer weiteren bevorzugten Ausführungsform betrifft die vorliegende Erfindung weiterhin eine Zusammensetzung enthaltend mindestens ein thermoplastisches Polyurethan und mindestens ein Poly(meth)acrylat wie zuvor beschrieben, wobei das mindestens eine Poly(meth)acrylat ein schlagzähmodifiziertes Poly(meth)acrylat ist.

Grundsätzlich können im Rahmen der vorliegenden Erfindung alle geeigneten schlagzähmodifizierten Poly(meth)acrylate eingesetzt werden, wobei bevorzugt ein Schlagzähmodifizierungsmittel auf Basis von vernetzten Poly(meth)acrylaten eingesetzt wird.

Ein erfindungsgemäß besonders bevorzugtes schlagzähmodifiziertes Poly(meth)acrylat weist eine Hartphase mit einer Glasübergangstemperatur von mindestens 70°C und eine Zähphase mit einer Glasübergangstemperatur von höchstens -10°C auf, wobei die Zähphase eine mittlere Teilchengröße von höchstens 130 nm aufweist und mindestens ein Teil der Zähphase mit der Hartphase kovalent verknüpft ist. Dementsprechend liegt die Zähphase teilchenförmig in der Kunststoffmischung vor, wobei die kontinuierliche Phase, die diese Teilchen umgibt, unter anderem die Hartphase, weiteres Poly(meth)acrylat und/oder thermoplastisches Polyurethan umfassen kann. Der Durchmesser der Teilchen ist hierbei kleiner oder gleich 130nm, wobei bevorzugte Kunststoffmischungen eine Zähphase mit einer Teilchengröße kleiner oder gleich 70 nm aufweisen, wobei sich die Teilchengröße auf den Durchmesser des Gewichtsmittels bezieht. Die Einheitlichkeit, der in Kunststoffmischung enthaltenen Zähphase, beträgt vorzugsweise 0,5 oder weniger. Besonders bevorzugt ist die Einheitlichkeit kleiner oder gleich 0,2. Eine hohe Einheitlichkeit der Zähphasen-Teilchen führt unter anderem zu besonders transparenten Kunststoffen.

Die Zähphase des erfindungsgemäß besonders bevorzugten Poly(meth)acrylats weist vorzugsweise eine Glasübergangstemperatur von höchstens -10°C auf. Bevorzugt ist die Glasübergangstemperatur der Zähphase kleiner oder gleich -20°C.

Die Glasübergangstemperatur kann über die Art und den Anteil der zur Herstellung der Zähphase verwendeten Monomere beeinflusst werden. Dabei kann die Glasübergangstemperatur Tg des Polymerisates in bekannter Weise mittels Differential Scanning Calorimetry (DSC) ermittelt werden.

Beispielsweise kann die Zähphase eines besonders bevorzugten Poly(meth)acrylats mindestens 50 Gew.-%, bevorzugt mindestens 60 Gew.-% an Wiederholungseinheiten aufweisen, die von einem Alkylacrylat mit 1 bis 6 Kohlenstoffatomen, bezogen auf das Gewicht der Zähphase des Poly(meth)acrylats, abgeleitet sind. Zu diesen bevorzugt einzusetzenden Monomeren gehören insbesondere Methylacrylat, Ethylacrylat, Propylacrylat, n-Butylacrylat, tert.-Butylacrylat, Pentylacrylat und Hexylacrylat, wobei Butylacrylat besonders bevorzugt ist.

Erfindungsgemäß ist vorzugsweise mindestens ein Teil der Zähphase mit der Hartphase kovalent verknüpft. Zweckmäßig sind mindestens 5 Gew.-%, vorzugsweise mindestens 15 Gew.-% und besonders bevorzugt mindestens 20 Gew.-% der Hartphase kovalent mit der Zähphase verknüpft. Eine kovalente Verknüpfung der Zähphase mit der Hartphase kann insbesondere durch die Verwendung von vernetzenden Monomeren bei der Herstellung der Zähphase der schlagzähmodifizierten Poly(meth)acrylate erzielt werden. Vernetzende Monomere sind Verbindungen, die zwei, drei oder mehr radikalisch polymerisierbare Gruppen aufweisen.

Zu diesen gehören insbesondere (Meth)acrylate mit zwei Doppelbindungen, wie beispielsweise (Meth)acrylate, die sich von ungesättigten Alkoholen ableiten, wie z. B. 2-Propinyl(meth)acrylat, Allyl(meth)acrylat, Vinyl(meth)acrylat, sowie (Meth)acrylate, die sich von Diolen oder höherwertigen Alkoholen ableiten, wie z.B. Glycoldi(meth)acrylate, wie Ethylenglycoldi(meth)acrylat, Diethylenglycoldi(meth)acrylat, Triethylenglycoldi(meth)acrylat, Tetra- und Polyethylenglycoldi(meth)acrylat, 1,3- Butandiol(meth)acrylat, 1,4-Butandiol(meth)acrylat, 1,6- Hexandioldi(meth)acrylat, Glycerindi(meth)acrylat und Diurethandimethacrylat; (Meth)acrylate mit drei oder mehr Doppelbindungen, wie z.B. Glycerintri(meth)acrylat, Trimethylolpropantri-(meth)acrylat, Pentaerythrittetra(meth)acrylat und Dipentaerythritpenta(meth)acrylat. Vielfach wird zwischen so genannten Kreuzvernetzern und Pfropfvernetzern unterschieden. Zur Gruppe der Kreuzvernetzer gehören Monomere, die wenigstens zwei Acryl- oder Methacrylreste enthalten. Als Pfropfvernetzer werden Monomere bezeichnet, die neben einem Acryl- oder Methacrylrest noch eine ethylenisch ungesättigte Gruppe von deutlich geringerer Polymerisationsneigung, in der Regel eine Allylgruppe, enthalten.

Bevorzugt umfasst die Zähphase mindestens 0,5 Gew.-%, bevorzugt mindestens 1 Gew.-%, bezogen auf das Gewicht der Zähphase, Wiederholungseinheiten, die von vernetzenden Monomeren abgeleitet sind. Hierbei sind Pfropfvernetzer oder Monomere, die drei oder mehr Acryl-oder Methacrylgruppen im Molekül enthalten, bevorzugt. Der Anteil an Wiederholungseinheiten, die von Pfropfvernetzern oder von Monomeren, die drei oder mehr Acryl- oder Methacrylgruppen im Molekül enthalten, abgeleitet sind, liegt besonders bevorzugt im Bereich von 1 bis 4 Gew.-%, bezogen auf das Gewicht der Zähphase. Monomere, die zwei (Meth)acrylgruppen im Molekül enthalten, können mit Vorteil mit einem Anteil von 0,05 bis 2 Gew.-% in Form von Wiederholungseinheiten in der Zähphase enthalten sein.

Da die Wiederholungseinheiten, über die die Zähphase mit der Hartphase kovalent verknüpft wird, von Monomeren abgeleitet sind, die während der Herstellung der Zähphase eingesetzt werden, wird das Gewicht dieser Wiederholungseinheiten der Zähphase zugerechnet. Neben den zuvor dargelegten Wiederholungseinheiten, die von Alkylacrylat mit 1 bis 6 Kohlenstoffatomen bzw. von vernetzenden Monomeren abgeleitet sind, können bevorzugte Zähphasen auch Wiederholungseinheiten umfassen, die von weiteren Monomeren abgeleitet sind. Zu diesen Monomeren zählen insbesondere die zuvor dargelegten (Meth)acrylate, die sich von den Alkylacrylaten mit 1 bis 6 Kohlenstoffatomen bzw. von den vernetzenden Monomeren unterscheiden. Neben der Zähphase umfasst das schlagzähmodifizierte Poly(meth)acrylat mindestens eine mit der Zähphase kovalent verbundene Hartphase. Die Hartphase weist eine Glasübergangstemperatur von mindestens 70°C, bevorzugt mindestens 80°C auf. Wie bereits dargelegt, kann die Glasübergangstemperatur durch die Wahl der Monomere zur Herstellung der Hartphase eingestellt werden.

Bevorzugt umfasst die Hartphase eines bevorzugten schlagzähmodifizierten Poly(meth)acrylats mindestens 80 Gew.-%, besonders bevorzugt mindestens 90 Gew.-% Wiederholungseinheiten, die von Methylmethacrylat abgeleitet sind, bezogen auf das Gewicht der Hartphase des Poly(meth)acrylats. Die Hartphase von bevorzugten Poly(meth)acrylaten kann neben Methylmethacrylat bis zu 20 Gew.-% Comonomere umfassen.

Gemäß einer bevorzugten Ausführungsform kann das Gewichtsverhältnis von an die Zähphase kovalent gebundene Hartphase zu Zähphase des schlagzähmodifizierten Poly(meth)acrylats mindestens 1 :10, besonders bevorzugt mindestens 1 : 5 und ganz besonders bevorzugt mindestens 1 :1 betragen.

Beispielsweise weist das Poly(meth)acrylat, insbesondere das schlagzähmodifizierte Poly(meth)acrylat, höchstens 0,1 Gew.-%, besonders bevorzugt höchstens 0,05 Gew.-% an wasserlöslichen Bestandteilen auf, bezogen auf das Gewicht des Poly(meth)acrylats. Ein geringer Anteil an wasserlöslichen Bestandteilen kann insbesondere durch das Aufarbeitungsverfahren bei der Herstellung des Poly(meth)acrylats erzielt werden. Durch diese Maßnahme kann insbesondere die Empfindlichkeit gegen Trübung unter Feuchtigkeitseinwirkung verringert werden.

Besonders geeignete Poly(meth)acrylate weisen einen geringen Anteil an aromatischen Gruppen, insbesondere an Styrol auf. Zweckmäßig sind insbesondere schlagzähmodifizierte Poly(meth)acrylate, die höchstens 10 Gew.-%, besonders bevorzugt höchstens 2 Gew.-% und ganz besonders bevorzugt höchstens 0,5 Gew.-% an Wiederholungseinheiten aufweisen, die von Monomeren mit aromatischen Gruppen, insbesondere von Styrolmonomeren abgeleitet sind.

Die erfindungsgemäße Zusammensetzung enthält das mindestens eine Poly(meth)acrylat in einer Menge von 40 bis 95 Gew.-%. Insbesondere 50 bis 90 Gew.-%., besonders bevorzugt 60 bis 85 Gew.-%, beispielsweise 70 bis 80 Gew.-%.

Erfindungsgemäß geeignete Poly(meth)acrylate können unter anderem durch bekannte Emulsionspolymerisationsverfahren erhalten werden, die unter anderem in Ullmann's Encyclopedia of Industrial Chemistry, Fifth Edition dargelegt sind. Im Allgemeinen wird hierfür eine wässrige Phase hergestellt, die neben Wasser übliche Additive, insbesondere Emulgatoren und Schutzkolloide zur Stabilisierung der Emulsion umfassen kann.

Geeignete Herstellungsverfahren sind in WO 2009/135702 A1 oder in DE 38 42 796 A beschrieben.

Zur Herstellung der erfindungsgemäßen Zusammensetzungen kann das mindestens eine thermoplastische Polyurethan mit dem mindestens einen Poly(meth)acrylat auf an sich bekannte Weise compoundiert werden. Dies kann beispielsweise in einem Extruder erfolgen. Die Reaktionsbedingungen können dabei in weiten Bereichen variieren. Vorzugsweise erfolgt das Compoundieren im Rahmen der vorliegenden Erfindung bei einer Temperatur im Bereich von 200 bis 260°C.

Demgemäß betrifft die vorliegende Erfindung auch ein Verfahren zur Herstellung einer Zusammensetzung enthaltend mindestens ein thermoplastisches Polyurethan und mindestens ein Poly(meth)acrylat wie zuvor beschrieben, wobei das mindestens eine thermoplastische Polyurethan mit dem mindestens einen Poly(meth)acrylat bei einer Temperatur im Bereich von 200 bis 260°C compoundiert wird.

Das Gewichtsverhältnis des mindestens einen thermoplastischen Polyurethans zu der Summe der eingesetzten Poly(meth)acrylate auf kann vorzugsweise im Bereich von 1:5 bis 1:1, besonders bevorzugt 1:4 bis 1:1,5 liegen.

Neben dem mindestens einen thermoplastischen Polyurethan und dem mindestens einen Poly(meth)acrylat kann die erfindungsgemäße Zusammensetzung weitere Verbindungen enthalten. Die Zusammensetzung kann beispielsweise 0 bis 30 Gew.-%, insbesondere 0,01 bis 30 Gew.-% weitere Verbindungen enthalten.

Sofern nicht anders angegeben ergibt die Summe aller Komponenten der erfindungsgemäßen Zusammensetzung 100 Gew.-%.

Neben einem thermoplastischen Polyurethan und einem Poly(meth)acrylat kann die erfindungsgemäße Zusammensetzung beispielsweise weitere Polymere aufweisen. Hierzu gehören insbesondere Polystyrole, Polymere, die Acrylnitril oder Maleinsäureanhydrid enthalten, Polyacrylnitrile, Polyether, Polyester, Polycarbonate sowie Polyvinylchloride, wobei Poly(meth)acrylate besonders bevorzugt sind.

Das Gewichtsmittel des Molekulargewichts Mw der Homo- und/oder Copolymere, die neben dem mindestens einen thermoplastischen Polyurethan und dem mindestens einen Poly(meth)acrylat in der erfindungsgemäßen Zusammensetzung optional enthalten sein können, kann in weiten Bereichen schwanken, wobei das Molekulargewicht üblicherweise auf den Anwendungszweck und die Verarbeitungsweise der Zusammensetzung abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, bestimmt mittels GPC.

Die erfindungsgemäßen Zusammensetzungen können übliche Additive und Zusatzstoffe umfassen. Dazu zählen beispielsweise Farbstoffe, Pigmente, Füllstoffe, Verstärkungsfasern, Gleitmittel. Polymerisierbare UV-Absorber können ebenfalls eingesetzt werden, um die Eigenschaften der erfindungsgemäßen Zusammensetzung zu verändern. Diese können beispielsweise zusammen mit den anderen Monomeren bei der Polymerisation der Hartphasen-Monomeren in das Emulsionspolymerisat einpolymerisiert werden. Darüber hinaus können diese Verbindungen auch bei der Herstellung des Poly(meth)acrylats eingesetzt werden.

Überraschende Vorteile weisen insbesondere Zusammensetzungen auf, die mindestens einen UV-Absorber umfassen.

Erfindungsgemäß bevorzugt sind Zusammensetzungen, wobei eine aus der Zusammensetzung hergestellte Spritzplatte von 2 mm Dicke einen HAZE Wert von kleiner 25 aufweisen, gemessen gemäß ASTM D 1003, Methode A bei Prüfkörpern von 2 mm. Besonders bevorzugt ist eine HAZE Wert von kleiner 20, insbesondere von kleiner 15.

Gemäß einer bevorzugten Ausführungsform betrifft die vorliegenden Erfindung demgemäß eine Zusammensetzung enthaltend mindestens ein thermoplastisches Polyurethan und mindestens ein Poly(meth)acrylat wie zuvor beschrieben, wobei eine aus der Zusammensetzung hergestellte Spritzplatte von 2 mm Dicke einen HAZE Wert von kleiner 25 aufweist, gemessen gemäß ASTM D 1003, Methode A bei Prüfkörpern von 2 mm.

Die erfindungsgemäßen Zusammensetzungen können zu Formkörpern, beispielsweise Folien mit hoher Transmission verarbeitet werden. Vorzugsweise weisen die erfindungsgemäßen Zusammensetzungen bzw. die hieraus erhältlichen Formkörper eine Transmission von mindestens 60%, bevorzugt mindestens 70% und ganz besonders bevorzugt mindestens 80% auf, weiter bevorzugt mindestens 85%, insbesondere mindestens 90%. Die Messung der Transmission erfolgt im Rahmen der vorliegenden Erfindung gemäß ASTM D 1003.

Demgemäß betrifft die vorliegende Erfindung auch Formkörper umfassend eine erfindungsgemäße Zusammensetzung enthaltend mindestens ein thermoplastisches Polyurethan und mindestens ein Poly(meth)acrylat wie zuvor beschrieben oder Formkörper umfassend eine Zusammensetzung erhältlich nach einem erfindungsgemäßen Verfahren.

Gemäß einer bevorzugten Ausführungsform betrifft die vorliegende Erfindung auch Formkörper umfassend eine erfindungsgemäße Zusammensetzung enthaltend mindestens ein thermoplastisches Polyurethan und mindestens ein Poly(meth)acrylat wie zuvor beschrieben oder umfassend eine Zusammensetzung erhältlich nach einem erfindungsgemäßen Verfahren, wobei der Formkörper eine Folie ist.

Die erfindungsgemäßen Formkörper, insbesondere Folien, zeigen eine besonders geringe Neigung zur Rissbildung und eine hohe Stabilität gegenüber Rissfortbildung.

Die erfindungsgemäßen Zusammensetzungen können zur Herstellung von Formkörpern mit hervorragenden Eigenschaften eingesetzt werden. Bevorzugte Formkörper sind insbesondere Folien. Derartige Folien zeichnen sich durch dauerhafte Klarheit, Unempfindlichkeit gegen Wärme und Kälte, Witterungsbeständigkeit, geringe Vergilbung und Versprödung und durch geringen Weißbruch beim Knicken oder Falten aus und eignen sich deshalb beispielsweise als Fenster in Planen, Autoverdecken oder Segeln. Weiterhin können diese Folien zur Abdeckung von Tastaturen, insbesondere von Notebooks oder Computertastaturen eingesetzt werden, um diese gegen Umwelteinflüsse, beispielsweise Nässe zu schützen. Solche Folien haben vielfach eine Dicke unter 1 mm, beispielsweise 0,05 bis 0,5 mm.

Darüber hinaus lassen sich auch Formkörper mit den erfindungsgemäßen Zusammensetzungen beschichten. Ein wichtiger Anwendungsbereich liegt in der Bildung von dünnen Oberflächenschichten von z. B. 0,05 bis 0,5 mm Dicke auf steifen, formbeständigen Grundkörpern, wie Blechen, Pappen, Spanplatten, Kunststoffplatten und ähnlichen Formkörpern. In diesem Fall kann der Anteil der Zähphase wesentlich niedriger und die Formmasse infolgedessen härter sein. Für die Herstellung derartiger Überzüge stehen verschiedene Verfahren zur Verfügung. So kann die Formmasse zu einer Folie extrudiert, geglättet und auf das Substrat aufkaschiert werden. Durch die Technik der Extrusionsbeschichtung kann ein extrudierter Strang auf die Oberfläche des Substrats aufgebracht und mittels einer Walze geglättet werden. Wenn als Substrat selbst ein thermoplastischer Kunststoff dient, besteht die Möglichkeit der Coextrusion beider Massen unter Bildung einer Oberflächenschicht aus der klaren Formmasse der Erfindung. Weiterhin kann der Kunststoff in 3D-Verformungsverfahren (Membranformpressen; Insert Moulding) eingesetzt werden. Hierbei können auch komplexe geometrische Formen bei sehr geringen Temperaturen gebildet werden, ohne dass die Eigenschaften des Kunststoffs unangemessen beeinträchtigt werden. Ein besonderes Anwendungsgebiet stellen insbesondere Formkörper dar, die im Wintersport eingesetzt werden. So können insbesondere Skier oder Snowboards mit den Kunststoffen der vorliegenden Erfindung beschichtet werden, wobei hierzu auch Folien eingesetzt werden können. Weiterhin können Schilder aller Art, insbesondere Hinweisschilder, Verkehrszeichen und Nummernschilder für Kraftfahrzeuge mit den Kunststoffmischungen der vorliegenden Erfindung beschichtet werden, wobei hierfür auch Folien eingesetzt werden, die auf diese Gegenstände aufgebracht werden. Darüber hinaus stellen beschichtete transparente Kunststoffplatten, die als Bestandteil von Gebäuden, beispielsweise Gewächshäusern, eingesetzt werden können, einen interessanten Anwendungsbereich der vorliegenden Erfindung dar.

Die erfindungsgemäßen Zusammensetzungen eignen sich auch zur Herstellung von Formkörpern mit einer Wanddicke über 1 mm; z. B. von extrudierten Bahnen von 1 bis 10 mm Dicke, die sich gut stanzen lassen und beispielsweise zur Herstellung bedruckbarer Blenden für Elektrogeräte geeignet sind, oder zur Herstellung von gespritzten Formkörpern hoher Qualität z. B. Kraftfahrzeugscheiben.

Gemäß einer weiteren Ausführungsform betrifft die vorliegende Erfindung auch die Verwendung einer erfindungsgemäßen Zusammensetzung enthaltend mindestens ein thermoplastisches Polyurethan und mindestens ein Poly(meth)acrylat wie zuvor beschrieben oder einer Zusammensetzung erhältlich nach einem erfindungsgemäßen Verfahren zur Herstellung einer Folie.

Gemäß einer bevorzugten Ausführungsform betrifft die vorliegende Erfindung auch die Verwendung einer erfindungsgemäßen Zusammensetzung enthaltend mindestens ein thermoplastisches Polyurethan und mindestens ein Poly(meth)acrylat wie zuvor beschrieben oder einer Zusammensetzung erhältlich nach einem erfindungsgemäßen Verfahren zur Beschichtung eines Formkörpers.

Besonders bevorzugt ist im Rahmen der vorliegenden Erfindung die Verwendung einer erfindungsgemäßen Zusammensetzung enthaltend mindestens ein thermoplastisches Polyurethan und mindestens ein Poly(meth)acrylat wie zuvor beschrieben oder einer Zusammensetzung erhältlich nach einem erfindungsgemäßen Verfahren zur Holzbeschichtung, beispielsweise Türen, Tische, Bänke, Fassaden oder Holzplatten, zur Beschichtung von Automobilaußenteile, zur Fußbodenbeschichtung, beispielsweise für Laminat, zur Beschichtung von Ski und Wasserski, Surfboards, und Möbeloberflächen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Einsatzstoffe

### 1.1 Verwendet wurden die Poly(meth)acrylat Standardtypen:

| | |
|---|---|
| PMMA LG EG 920 | Extrusionsqualität MFR ca. 1,4 g/10min (ASTM D 1238 - 230°C, 3,8kg) von der Firma LG |
| PMMA LG EH 910 | Extrusionsqualität MFR ca. 0,9 g/10min (ASTM D 1238 - 230°C, 3,8kg) von der Firma LG |
| PMMA IF 870S | Standardware MFR ca. 20 g/10min (ASTM D 1238 - 230°C, 3,8kg) von der Firma LG |
| PMMA IG 840 | Standardware MFR ca. 5 g/10min (ASTM D 1238 - 230°C, 3,8kg) von der Firma LG |

### Schlagzähmodifizierten Typen:

| | |
|---|---|
| PMMA HI 835S | MFR ca. 2,6 g/10min (ASTM D 1238 - 230°C, 3,8kg) von der Firma LG |
| Plexiglas zk 50 | MVR 0,1 cm³/10min (DIN EN ISO 1133 - 230°C, 3,8kg) von der Firma Röhm |

### 1.2 Verwendet wurden weiterhin die TPU Materialien Elastollan A bis G.

Die Rezepturen der verwendeten TPU sind in der Tabelle 1 zusammengefasst.

**Tabelle 1: Rezepturen der verwendeten TPU. Angaben in Gewichtsteilen.**

| Elastollan | A | B | C | D | E | F | G |
|---|---|---|---|---|---|---|---|
| Polyol 1 | 1000 | | | | | | |
| Polyol 2 | | 1000 | | | | | |
| Polyol 3 | | | | | | | 1000 |
| Polyol 4 | | | 1000 | 1000 | | 1000 | |
| Polyol 5 | | | | | 1000 | | |
| Hexamethylendiisocyanat-1,6 | 247 | 273 | 319 | | | | |
| 4,4'-Diisocyanatodicyclohexylmethan | | | | 1203 | 1213 | | |
| 4,4'-Diphenylmethandiisocyanat | | | | | | 1665 | 1630 |
| Hexandiol-1,6 | | 111 | 106 | | | | |
| Butandiol-1,4 | 93 | | | 323 | 324 | 504 | 540 |
| Elastostab H01 | 14 | 8 | | | 31 | | 8 |

Die Zusammensetzungen der verwendeten Polyole gehen aus Tabelle 2 hervor. Dabei ist die Säurezahl der Polyole jeweils <0,8 mg KOH/g, der Wasseranteil im Polyol ist jeweils < 0,03% und die Funktionalität des Polyols ist jeweils 2.

Polyol 5 wird unter dem Handelsnamen Capa™2100 von der Firma Perstorp vertrieben. Polyol 4 wird unter dem Namen PolyTHF® 1000 von der Firma BASF vertrieben.

**Tabelle 2: Zusammensetzung der verwendeten Polyole**

| | OH-Zahl [mg KOH/g] | Monomere |
|---|---|---|
| Polyol 1 | 45 | Adipinsäure - Butandiol-1,4 |
| Polyol 2 | 56 | Adipinsäure - Butandiol-1,4 - Hexandiol-1,6 Verhältnis Hexandiol-1,6 zu Butandiol-1,4 wie 1:1 |
| Polyol 3 | 56 | Adipinsäure - Butandiol-1,4 - Ethylenglycol-1,2 Verhältnis Ethylenglycol-1,2 zu Butandiol 1,4 wie 1:1 |
| Polyol 4 | 112 | Tetrahydrofuran |
| Polyol 5 | 112 | Caprolacton Monomer |

### 2. Herstellbeispiele

### 2.1 Herstellung der TPU Materialien im Handgußverfahren

Die in der zugrundeliegenden Rezeptur festgelegte Menge Polyol und der Kettenverlängerer wird in der Weißblechdose eingewogen und kurz mit Stickstoff beschleiert. Die Dose wird mit einem Deckel verschlossen und im Heizschrank auf ca. 90°C aufgeheizt.

Ein weiterer Heizschrank zum Tempern der Schwarte wird auf 80 °C vorgeheizt. Die Teflonschale wird auf den Heiztisch gestellt und dieser auf 125°C eingestellt.

Die berechnete Menge an flüssigen Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48°C im Heizschrank gelagert.

Zusätze wie Hydrolyseschutz, Antioxidans, etc. die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80°C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110°C wird die Reaktionsmischung in die Teflonschalen, die auf 125°C vorgeheizt sind, ausgegossen.

10min nach Start der Stoppuhr wird die Schwarte vom Heiztisch genommen und anschließend für 15h im Heizschrank bei 80°C gelagert. Die ausgekühlte Schwarte wird in der Schneidmühle zerkleinert. Das Granulat wird nun für 3h bei 110°C getrocknet und trocken gelagert.

Grundsätzlich kann dieses Verfahren auf den Reaktionsextruder oder das Bandverfahren übertragen werden.

In Tabelle 3 sind die Shore-Härte und der Volumenflussindex als Maß für das Molekulargewicht der erhaltenen Elastollane A bis G zusammengefasst

**Tabelle 3: Eigenschaften der verwendeten TPU**

| Elastollan | Shore A Härte | Shore D Härte | MVR Wert [cm³/10min] (200°C/5kg) |
|---|---|---|---|
| A | 90 | | 15 |
| B | 85 | | 40 |
| C | 85 | | 150 |
| D | | 60 | 30 |
| E | | 65 | 20 |
| F | | 74 | 0 |
| G | | 74 | 0 |

### 2.2 Herstellung der TPU-PMMA Blends

Die TPU-PMMA Blends wurden jeweils mit einem Doppelwellen-extruder Typ ZE 40 A der Fa. Berstorff mit einer Verfahrensteillänge von 35 D unterteilt in 10 Gehäuse hergestellt und anschließend an einer Arburg 520S mit einem Schneckendurchmesser von 30 mm spritzgegossen. Die Spritzplatten hatten eine Dicke von 2mm.

### 3. Untersuchung der Blends

Die Gesamttransmission, der HAZE Wert (Trübung) und die Clarity Werte wurden nach der ASTM D 1003 (Methode A) bestimmt. Alle Werte (Gesamttransmission, HAZE und Clarity) wurden mit einem haze gard plus - Gerät, Hersteller: BYK Gardner ermittelt.

In Tabelle 4 sind die Zusammensetzung der erhaltenen Blends 1 bis 7 zusammengefasst sowie die jeweils bestimmte Transmission, der HAZE Wert und der Clarity Wert. Blends 1 bis 3 sind erfindungsgemäß, Blends 4 bis 7 sind Vergleichsbeispiele (VB).

**Tabelle 4**

| Blend | | 1 | 2 | 3 | 4 (VB) | 5 (VB) | 6 (VB) | 7 (VB) |
|---|---|---|---|---|---|---|---|---|
| Elastollan A | [GT] | 25 | | | | | | |
| Elastollan B | [GT] | | 25 | | | | | |
| Elastollan C | [GT] | | | 25 | | | | |
| Elastollan D | [GT] | | | | 25 | | | |
| Elastollan E | [GT] | | | | | 25 | | |
| Elastollan F | [GT] | | | | | | 25 | |
| Elastollan G | [GT] | | | | | | | 25 |
| PMMA HI 835 HS | [GT] | 75 | 75 | 75 | 75 | 75 | 75 | 75 |
| | | | | | | | | |
| Transmission | | 91,5 | 89,5 | 87,2 | 74,9 | 70,7 | 26,5 | 35,2 |
| Haze | | 18,6 | 16,2 | 53,1 | 79,4 | 60,2 | 102,0 | 101,7 |
| Clarity | | 85,4 | 91,4 | 66,4 | 69,3 | 93,6 | 1,3 | 3,3 |

In Tabelle 5 sind die Zusammensetzung der erhaltenen Blends 1 bis 7 zusammengefasst sowie die jeweils bestimmte Transmission, der HAZE Wert und der Clarity Wert. Blends 8 bis 10 sind erfindungsgemäß, Blend 11 ist ein Vergleichsbeispiel (VB).

**Tabelle 5**

| Blend | | 8 | 9 | 10 | 11 (VB) |
|---|---|---|---|---|---|
| Elastollan A | [GT] | 25 | | | |
| Elastollan B | [GT] | | 25 | | |
| Elastollan C | [GT] | | | 25 | |
| Elastollan D | [GT] | | | | 25 |
| Plexiglas ZK 50 | [GT] | 75 | 75 | 75 | 75 |
| | | | | | |
| Transmission | | 90,5 | 89,4 | 88,4 | 73,1 |
| Haze | | 16,5 | 14,2 | 52,7 | 99,5 |
| Clarity | | 87,1 | 87,9 | 76,0 | 15,7 |

In Tabelle 6 sind die Zusammensetzung der erhaltenen Blends 12 bis 14 zusammengefasst sowie die jeweils bestimmte Transmission, der HAZE Wert und der Clarity Wert. Blends 12 bis 14 sind erfindungsgemäß.

**Tabelle 6**

| Blend | | 12 | 13 | 14 |
|---|---|---|---|---|
| Elastollan B | [GT] | 15 | 25 | 35 |
| PMMA HI 835 HS | [GT] | 85 | 75 | 65 |
| | | | | |
| Transmission | | 90,9 | 88,8 | 88,5 |
| HAZE | | 14,2 | 20,0 | 28,5 |
| Clarity | | 94,7 | 91,6 | 89,7 |

In Tabelle 7 sind die Zusammensetzung der erhaltenen Blends 15 bis 18 zusammengefasst sowie die jeweils bestimmte Transmission, der HAZE Wert und der Clarity Wert. Blends 15 bis 18 sind erfindungsgemäß.

**Tabelle 7**

| Blend | | 15 | 16 | 17 | 18 |
|---|---|---|---|---|---|
| Elastollan B | [GT] | 25 | 25 | 25 | 25 |
| PMMA LG EG 920 | [GT] | 75 | | | |
| PMMA LG EFH 910 | [GT] | | 75 | | |
| PMMA LG IF 870S | [GT] | | | 75 | |
| PMMA LG IG 840 | [GT] | | | | 75 |
| | | | | | |
| Transmission | | 90,3 | 89,9 | 89,9 | 90,2 |
| HAZE | | 13,5 | 13,5 | 11,4 | 13,8 |
| Clarity | | 94,5 | 93,3 | 92,5 | 95,4 |

## Patentansprüche

1. Zusammensetzung enthaltend mindestens ein thermoplastisches Polyurethan und mindestens ein Poly(meth)acrylat, wobei das mindestens eine thermoplastische Polyurethan ein auf 1,6-Hexamethylendiisocyanat (HDI) als Aufbaukomponente (a), mindestens einem Diol als Aufbaukomponente (b)und mindestens einem Kettenverlängerer als Aufbaukomponente (c), basierendes Polyurethan ist,
wobei der mindestens eine Kettenverlängerer ausgewählt ist aus der Gruppe bestehend aus 1,2-Ethylenglycol, 1,3-Propandiol, 1,4-Butandiol und 1,6-Hexandiol,
wobei die Zusammensetzung das mindestens eine thermoplastische Polyurethan in einer Menge im Bereich von 5 Gew.-% bis 60 Gew.-% enthält, und
wobei die Zusammensetzung das mindestens eine Poly(meth)acrylat in einer Menge im Bereich von 40 Gew.-% bis 95 Gew.-% enthält, wobei die Summe aller Komponenten der Zusammensetzung 100 Gew.-% ergibt,
wobei als Diol ein Polyetherdiol oder Polyesterdiol oder eine Mischungen aus zwei oder mehr davon eingesetzt wird, und
wobei die Aufbaukomponenten (a), (b) und (c) in solchen Mengen zur Reaktion gebracht werden, dass das Äquivalenzverhältnis von NCO-Gruppen der Diisocyanate (a) zur Summe der Hydroxylgruppen der Aufbaukomponenten (b) und (c) 0,9 bis 1,1 : 1 beträgt.

2. Zusammensetzung gemäß Anspruch 1, wobei das Polyesterdiol ein Polycarbonatdiol ist.

3. Zusammensetzung gemäß einem der Ansprüche 1 oder 2, wobei das thermoplastische Polyurethan eine Shore-Härte (Shore A) im Bereich von 70 bis 100 bestimmt gemäß DIN 53505 aufweist.

4. Zusammensetzung gemäß einem der Ansprüche 1 bis 3, wobei das mindestens eine Poly(meth)acrylat ein schlagzähmodifiziertes Poly(meth)acrylat ist.

5. Zusammensetzung gemäß einem der Ansprüche 1 bis 4, wobei das Gewichtsverhältnis des mindestens einen thermoplastischen Polyurethans zu dem mindestens einen Poly(meth)acrylat im Bereich von 1:5 bis 1:1 liegt.

6. Zusammensetzung gemäß einem der Ansprüche 1 bis 5, wobei eine aus der Zusammensetzung hergestellte Spritzplatte von 2 mm Dicke einen HAZE Wert von kleiner 25 aufweist, gemessen gemäß ASTM D 1003, Methode A bei Prüfkörpern von 2 mm.

7. Verfahren zur Herstellung einer Zusammensetzung gemäß einem der Ansprüche 1 bis 6, wobei das mindestens eine thermoplastische Polyurethan mit dem mindestens einen Poly(meth)acrylat bei einer Temperatur im Bereich von 200 bis 260°C compoundiert wird.

8. Formkörper umfassend eine Zusammensetzung gemäß einem der Ansprüche 1 bis 6 oder eine Zusammensetzung erhältlich nach einem Verfahren gemäß Anspruch 7.

9. Formkörper gemäß Anspruch 8, wobei der Formkörper eine Folie ist.

10. Verwendung einer Zusammensetzung gemäß einem der Ansprüche 1 bis 6 oder einer Zusammensetzung erhältlich nach einem Verfahren gemäß Anspruch 7 zur Herstellung einer Folie.

11. Verwendung einer Zusammensetzung gemäß einem der Ansprüche 1 bis 6 oder einer Zusammensetzung erhältlich nach einem Verfahren gemäß Anspruch 7 zur Beschichtung eines Formkörpers.

## Claims

1. A composition comprising at least one thermoplastic polyurethane and at least one poly(meth)acrylate, wherein the at least one thermoplastic polyurethane is a polyurethane based on hexamethylene 1,6-diisocyanate (HDI) as structural component (a), on at least one diol as structural component (b) and on at least one chain extender as structural component (c),
where the at least one chain extender is selected from the group consisting of ethylene 1,2-glycol, 1,3-propanediol, 1,4-butanediol and 1,6-hexanediol,
where the composition comprises a quantity in the range of 5% by weight to 60% by weight of the at least one thermoplastic polyurethane, and
where the composition comprises a quantity in the range of 40% by weight to 95% by weight of the at least one poly (meth) acrylate, where the entirety of all of the components of the composition provides 100% by weight,
where diol used comprises a polyetherdiol or polyesterdiol or a mixture of two or more thereof, and where the quantities reacted of the structural components (a), (b) and (c) are such that the equivalence ratio of NCO groups of the diisocyanates (a) to the entirety of the hydroxy groups of the structural components (b) and (c) is 0.9 to 1.1 : 1.

2. The composition according to claim 1, where the polyesterdiol is a polycarbonatediol.

3. The composition according to claim 1 or 2, where the Shore hardness (Shore A) of the thermoplastic polyurethane is in the range of 70 to 100, determined in accordance with DIN 53505.

4. The composition according to any of claims 1 to 3, where the at least one poly(meth)acrylate is an impact-modified poly(meth)acrylate.

5. The composition according to any of claims 1 to 4, where the ratio by weight of the at least one thermoplastic polyurethane to the at least one poly(meth)acrylate is in the range of 1:5 to 1:1.

6. The composition according to any of claims 1 to 5, where an injection-molded plaque of thickness 2 mm produced from the composition has a HAZE value smaller than 25, measured in accordance with ASTM D1003, Method A, using test specimens measuring 2 mm.

7. A process for the production of a composition according to any of claims 1 to 6, where the at least one thermoplastic polyurethane is compounded with the at least one poly (meth) acrylate at a temperature in the range of 200 to 260°C.

8. A molding comprising a composition according to any of claims 1 to 6 or a composition obtainable by a process according to claim 7.

9. The molding according to claim 8, where the molding is a film.

10. The use of a composition according to any of claims 1 to 6, or of a composition obtainable by a process according to claim 7 for producing a film.

11. The use of a composition according to any of claims 1 to 6 or of a composition obtainable by a process according to claim 7 for coating a molding.

## Revendications

1. Composition contenant au moins un polyuréthane thermoplastique et au moins un poly(méth)acrylate, l'au moins un polyuréthane thermoplastique étant un polyuréthane à base de diisocyanate de 1,6-hexamethylène (HDI) en tant que composant de structure (a), d'au moins un diol en tant que composant de structure (b) et d'au moins un extenseur de chaînes en tant que composant de structure (c),
l'au moins un extenseur de chaînes étant choisi dans le groupe constitué par le 1,2-éthylèneglycol, le 1,3-propanediol, le 1,4-butanediol et le 1,6-hexanediol,
la composition contenant l'au moins un polyuréthane thermoplastique en une quantité dans la plage de 5 % en poids à 60 % en poids, et
la composition contenant l'au moins un poly(méth)acrylate en une quantité dans la plage de 40 % en poids à 95 % en poids, la somme de tous les composants de la composition donnant 100 % en poids,
un polyétherdiol ou un polyesterdiol ou un mélange de deux ou plus de ceux-ci étant utilisé en tant que diol, et
les composants de structure (a), (b) et (c) étant mis en réaction dans de telles quantités que le rapport d'équivalence des groupes NCO des diisocyanates (a) sur la somme des groupes hydroxyle des composants de structure (b) et (c) est de 0,9 à 1,1:1.

2. Composition selon la revendication 1, le polyesterdiol étant un polycarbonatediol.

3. Composition selon l'une quelconque des revendications 1 et 2, le polyuréthane thermoplastique présentant une dureté Shore (Shore A) dans la plage de 70 à 100 déterminée selon la norme DIN 53505.

4. Composition selon l'une quelconque des revendications 1 à 3, l'au moins un poly(méth)acrylate étant un poly(méth)acrylate à résilience modifiée.

5. Composition selon l'une quelconque des revendications 1 à 4, le rapport pondéral de l'au moins un polyuréthane thermoplastique sur l'au moins un poly(méth)acrylate se situant dans la plage de 1:5 à 1:1.

6. Composition selon l'une quelconque des revendications 1 à 5, une plaque d'injection de 2 mm d'épaisseur préparée à partir de la composition présentant une valeur de trouble inférieure à 25, mesurée selon la norme ASTM D 1003, méthode A sur des éprouvettes de 2 mm.

7. Procédé pour la préparation d'une composition selon l'une quelconque des revendications 1 à 6, l'au moins un polyuréthane thermoplastique étant compoundé avec l'au moins un poly(méth)acrylate à une température dans la plage de 200 à 260 °C.

8. Corps moulé comprenant une composition selon l'une quelconque des revendications 1 à 6 ou une composition pouvant être obtenue par un procédé selon la revendication 7.

9. Corps moulé selon la revendication 8, le corps moulé étant une feuille.

10. Utilisation d'une composition selon l'une quelconque des revendications 1 à 6 ou d'une composition pouvant être obtenue par un procédé selon la revendication 7 pour la préparation d'une feuille.

11. Utilisation d'une composition selon l'une quelconque des revendications 1 à 6 ou d'une composition pouvant être obtenue par un procédé selon la revendication 7 pour le revêtement d'un corps moulé.
